# EUROPEAN PATENT APPLICATION

(11) **EP 1 712 128 A1**
(43) Date of publication of application: **18.10.2006**
(21) Application number: 06251980.6
(22) Date of filing: 07.04.2006
(51) Int. Cl.: A01K 91/08

(54) **Fishing gear for boat fishing**

(30) Priority: 11.04.2005 JP 2005113352
(71) Applicant: Sugiyama, Yukitoshi, Fuji-Shi, Shizuoka 417-0001 (JP)
(72) Inventor: Sugiyama, Yukitoshi, Fuji-Shi, Shizuoka 417-0001 (JP)
(74) Representative: Smith, Norman Ian

(57) **Abstract**

A fishing gear (1) for boat fishing includes fishing line guiding parts (3) severally composed of a fishing line passage (31, 71) serving to allow a fishing line (100) free travel and insertion and fishing line attaching and detaching device (32, 72) serving to permit the fishing line (100) to be introduced into the fishing line passage (31, 71) and to be removed from the fishing line passage (31, 71) that are disposed bilaterally across an interval and the fishing gear (1) is furnished with a fishing line nipping part (4) capable of nipping a part of the fishing line (100) exposed between the fishing line guiding parts (3) and releasing nip of the fishing line (100) when tensile force exceeding a prescribed magnitude acts on the fishing line (100).

## Description

This invention relates to a fishing gear for boat fishing which has a function of easily allowing attachment to and detachment from a fishing line and adjusting the fishing line of a fishing line contrivance to be taken up by means of a reel.

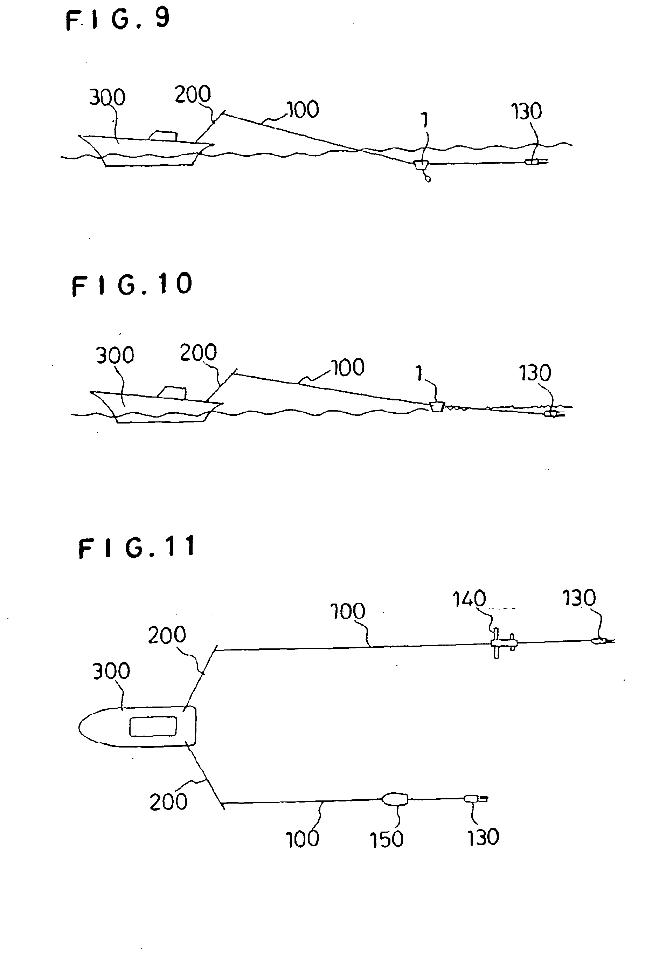

The trawling method which is aimed at catching large-sized fishes, such as tuna fish and spearfish, is executed by connecting a fishing line contrivance provided at the leading terminal thereof with a lure 130 and a fishing line 100 through an underwater plate 150 or a sham airplane jig 140 as illustrated in FIG. 11, plunging the part of the contrivance extending from the underwater plate 150 or the sham airplane jig 140 to the lure 130 into the sea water, and causing a fishing boat 300 to tow the fishing line contrivance.

The underwater plate 150 performs an action of maintaining the lure 130 at a prescribed depth and meanwhile waving it bilaterally in the sea water, thereby varying the motion of the lure 130 disposed at the leading terminal of the contrivance. And the sham airplane jig 140 mentioned above fulfills an important function of ensuring catch of large-sized fishes as by sliding on the sea water and splashing the water, thereby creating a situation resembling the scene of seagulls crowing densely and catching sardines and luring a school of fish as well by dint of the sound emitted thereby in the relevant sea area.

In the case of boat fishing, the use of a fishing line contrivance longer than a fishing rod has been customary heretofore. For use in the trawling method, for example, the fishing rod 200 have lengths approximating 1.8 m and the fishing line contrivances incorporating an underwater plate 150 have lengths in the approximate range of 1.7 to 4.5 m. In the case of the trawling method which utilizes a sham airplane jig 140, the fishing line contrivances used therein have lengths reaching more than 30 m. Since the fishing line part of the fishing contrivance used for the conventional trawling method is fixed as tied to the underwater plate 150 or the sham airplane jig 140, the angler is not enabled to take up the tishing line part of the fishing line contrivance with a reel and is required to use his own hands for hauling it in.

When the fishing line contrivance hooks a large-sized fish, therefore, a strong tensile force produced in the contrivance by the fish in the direction of the sea side entails such problems as acting on the fishing line contrivance, inflicting damage on the hands and fingers of a boat crew, i.e. the angler, particularly while the fish is being taken in, and exposing the angler to the grave danger of falling into the sea. Even when a comparatively small fish is hooked, the fishing line contrivance poses the problem that the angler is not allowed to haul up the fish immediately and cherish amply the true pleasure of hauling up the fish.

When the finishing is done in a sea area having a comparatively deep water depth, a hollow float is normally used because the length of the fishing line contrivance proves to be unduly long as a logical consequence. The hollow float, however, only serves as a mark for a main finishing line and incurs difficulty in constituting an element for such a fishing line contrivance which excels in the sensation of a bite of fish.

JP-A HEI 6-284842 discloses a connecting device which is adapted to join a main fishing line and a fishing line contrivance and formed in the shape of a slender body capable of freely traveling through main fishing line guides erected at proper intervals on a fishing rod using a reel. In accordance with this invention, the main fishing line can be very easily passed through the main fishing line guides on the reeling fishing rod and the main fishing line and the fishing line contrivance can be easily connected and disconnected. Even in accordance with the aforementioned invention, the fishing line part of which the fishing line contrivance can be reeled up is limited by the inside diameter of the main fishing line guides. When such a fishing gear as a float which has a size larger than the inside diameter of the main fishing line guides is fixed on an extremely long fishing line contrivance, therefore, the fishing line can be taken up only to the seat of this fixation. The foregoing problems which are encountered as described above in the trawling method or the float fishing in a comparatively deep sea area remain yet to be solved.

The invention of this patent application is aimed at overcoming the aforementioned problems attendant on the prior art and providing a fishing gear for boat fishing so constructed that even an extremely long fishing line contrivance used for boat fishing by the trawling method is enabled to take up thoroughly a fishing line with a reel without requiring itself to be hauled in with hands till a hooked fish can be directly taken in as with a net and further to permit attachment to and detachment from a fishing line easily.

For the purpose of solving the problems mentioned above, the fishing gear for boat fishing according to the present invention is provided with fishing line guiding parts, severally formed of a fishing line passage for allowing a fishing line to travel freely therethrough and a fishing line attaching and detaching means capable of introducing a fishing line into the fishing line passage and removing the fishing line from the fishing line passage and mutually disposed bilaterally across an intervening space, and a fishing line nipping part adapted to nip a fishing line exposed between the bilateral fishing line guiding parts and relieve the nip of the fishing line when tensile force exceeding a prescribed magnitude acts on the fishing line.

In the invention, the fishing line passage mentioned above is only required to be furnished with a space at least sufficient for inserting and discharging a fishing line and to be so formed as to avoid interfering with the travel of the fishing line in the fishing line passage while the fishing line is being reeled up. The fishing line passage, therefore, may he formed in the shape of a groove or a hole in a mounting member, for example, or may be so constructed as to be directly mounted on the mounting member.

The fishing line guiding parts are severally disposed on bilaterally opposite sides across a prescribed space as described above. The introduction of a fishing line into the fishing line passage on the left side and the discharge of the fishing line from the fishing line passage are executed through a fishing line removing part which is disposed in the fishing line guiding part on the left side. Likewise, the introduction and the discharge of a fishing line into and out of the fishing line passage on the right side are executed through the fishing line attaching and detaching means disposed on the fishing line guiding part on the right side.

The fishing line nipping part does not need to be particularly restricted but is only required to be such means as relieves the nip of a fishing line when tensile force surpassing the prescribed magnitude acts on the fishing line. Further, the quality of the material used therefor does not need to be particularly restricted. A nipping means which is formed of metal besides synthetic resin may be used. As concrete examples of the fishing line nipping parts which are usable herein, face fasteners may be cited in addition to such nipping means as clips and clamps. When the face fastener is adopted as the fishing line nipping part, the fishing line nipping part itself changes the shape thereof in conformity with the tensile force of the fishing line and uniform tensile force acts on the nipped part of the fishing line. Incidentally, the fishing line nipping part properly selected herein ought to possess an appropriate nipping force which conforms to such conditions of use as the thickness of a fishing line to be used, the weights and shapes of various fishing tools which comprise the fishing line contrivance, such as sinkers, the structures of the fishing contrivances, and the speed of the towing of a boat using the fishing gear of this invention for boat fishing in the fishing spot.

The fishing gear for boat fishing is endowed with the above construction and further comprises a mounting member having at least either of a weight and a floating body incorporated removably therein, fishing line guiding parts, severally formed of a fishing line passage for allowing a fishing line to travel freely therethrough and a fishing line attaching and detaching means capable of introducing a fishing line into the fishing line passage and removing the fishing line from the fishing line passage and mutually disposed on the bilateral sides of the mounting member across an intervening space, and a fishing line nipping part adapted to nip a fishing line exposed between the bilateral fishing line guiding parts and relieve the nip of the fishing line when tensile force exceeding a prescribed magnitude acts on the fishing line and disposed on the mounting member.

The mounting member which partakes the construction of the invention and fits the use therein may be formed of such a synthetic resin as a plastic substance or such a metal as an aluminum alloy. As concrete examples of the shape of this mounting member which is properly selected and used herein, such plate-like bodies as the circle, ellipse, triangle, square, and polygon and such three-dimensional shapes as the cone, pyramid, prism, hemisphere, ellipsoid, hilly body, and body of nearly the shape of a water drop as viewed on a ground plan may be cited. Besides, the shapes formed like fishes, animals, and characters as motifs may be used for the mounting member.

The floating body which is incorporated in the fishing gear for boat fishing does not need to be particularly restricted by the quality of the material used thereof. As concrete examples of the floating body, hollow bodies which are formed of stainless steel or a metallic material having undergone a prescribed surface treatment and similar bodies which are formed of such a synthetic resin as foam resin may be cited.

In the fishing gear for boat fishing, the fishing line nipping part incorporated in the fishing gear for boat fishing is disposed on the nearly opposite side relative to the fishing line guiding part.

In the fishing gear for boat fishing, a guide part serving to take around the fishing line exposed between the fishing line guiding parts and guiding it to the fishing line nipping part is projected on the fishing gear for boat fishing. That is, the mounting member partaking in the construction of the fishing gear for boat fishing is provided with a guide part and the fishing line exposed between the fishing line guiding parts is stretched and suspended by the guide part and guided to the fishing line nipping part while the fishing line nipping part is keeping the fishing line in a nipped state. The guide part which can be adopted herein is made of such a synthetic resin as a plastic substance or such a metal as an aluminum alloy and formed in the shape of a column having a varying cross section such as a circle or a polygon. At least one such guide part is projected from the mounting member by a method which infallibly fixes the part. As concrete examples of this fixing method, a method which integrally forms the part with the same material as the mounting member by the molding technique, a method which effects the fixation aimed at as with an adhesive agent, and a method which effects this fixation with such a tying member as a bolt may be cited.

Then, the height and the diameter of the guide part do not need to be particularly restricted. The guide part is so formed as to possess a height sufficient to prevent the guide part from entangling a fishing line and a diameter sufficient to prevent the guide part from being readily deformed by the tensile force of the fishing line 100 while the fishing line is in a drawn state.

The fishing gear for boat fishing shares the above construction with the exception of using a floating body in the place of the mounting member furnished as with a weight. In other words, the invention is provided with fishing line guiding parts, severally formed of a fishing line passage for allowing a fishing line to travel freely therethrough and a fishing line attaching and detaching means capable of introducing a fishing line into the fishing line passage and removing the fishing line from the fishing line passage and mutually disposed on the bilateral sides of the floating body each across an intervening space, and a fishing line nipping part disposed on the floating body and adapted to nip a fishing line exposed between the bilateral fishing line guiding parts and relieve the nip of the fishing line when tensile force exceeding a prescribed magnitude acts on the fishing line.

In the fishing gear for boat fishing, the floating body in the fishing gear for boat fishing is furnished with a guide passage formed between the bilateral fishing line guiding parts and adapted to stretch a fishing line between the bilateral fishing line guiding parts and guide it to the fishing line nipping part while the fishing line nipping part is keeping the fishing line in a nipped state. That is, the floating body partaking in the construction of the fishing gear for boat fishing is provided with a guide passage and the fishing line exposed between the bilateral fishing line guiding parts is stretched and suspended in the guide passage and guided to the fishing line nipping part while the fishing line nipping part is keeping the fishing line in a nipped state.

Incidentally, the floating body mentioned above does not need to be particularly restricted in terms of the quality of the material thereof but is only required to be constructed with the object of inducing buoyancy. As concrete examples of this floating body, hollow bodies formed of stainless steel or a metal material having undergone a prescribed surface treatment and such hollow bodies formed of a synthetic resin such as a foam resin may be cited.

The fishing gear for boat fishing is endowed with a function of adjusting the length of a fishing line which a fishing contrivance comprises. Specifically, in accordance with this construction, when tensile force exceeding a prescribed magnitude acts on the fishing line, it is relieved from the state of being fastened to the fishing line nipping part and allowed to travel freely in the fishing line passage. Since the part of the fishing line equivalent to the length from the fishing gear for boat fishing contemplated by this invention to the part at which such a fishing tool as a lure is connected thereto can be taken up on the reel, the necessity of the dangerous work of hauling in the fishing line contrivance with hands can be obviated.

In accordance with the inventions, the part of the fishing line from the fishhook located in the leading terminal of the contrivance or the fishing tool such as a lure to the fishing gear for boat fishing of this invention can be adjusted to a necessary length owing to the fact that the fishing line nipping part nips the fishing line exposed between the fishing line attaching and detaching means disposed on the bilateral sides and immobilizes it.

Further, in accordance with the construction of the invention, since at least either of the weight and the floating body is capable of being attached to and detached from the mounting member, the sinking speed and the swimming depth of the contrivance can be adjusted by changing the weight or the floating body to a proper tool. Specifically, when the trawling method is implemented, the fishing line contrivance disposed through the fishing gear for boat fishing can be sunken to a necessary water depth because the fishing gear for boat fishing can be utilized as a sham airplane jig, an underwater plate, or an underwater weight. When the casting method is implemented, the range of casting can be expanded because the fishing line contrivance can be thrown far.

In accordance with the construction of the invention, since the fishing line is taken around to the side devoid of the fishing line guiding part, part of the fishing line collides against the edge terminal of the mounting member and exposes itself to proper frictional force. As a result, the tensile force which acts on the fishing line nipping part can be lessened. Thus, the fishing gear can be formed in a compact shape because the fishing line nipping part to be selected is no longer required to be limited only to the type which possesses powerful nipping force.

In accordance with the construction of the invention, the tensile force which acts on the fishing line nipping part is lessened because the fishing line collides against at least one of the guiding parts and exerts proper frictional force thereon. The tensile force acting on the fishing line nipping part can be further lessened by erecting many guiding parts which support and stretch the fishing line. Owing to the construction of this description, the strength with which the fishing gear for boat fishing contemplated by this invention is fastened to the fishing line can be properly adjusted in conformity with the conditions of use such as the towing speed.

In accordance with the construction of the invention, the floating body may be installed and put to use. Further, in accordance with the construction of the invention, the floating body is used. As a result, either of these inventions in the trawling method enables the floating body to slide on the surface of the sea and serve as a substitute for the sham airplane jig. In the case of float fishing done on a breakwater situated near a sea area having a comparatively large water depth, a fishing line contrivance formed by using the fishing gear contemplated by the invention enables a fishing line to be easily reeled up even when the fishing line contrivance has a length sufficient for the fishhook to reach and settle down on the bottom of the sea. The fishing line contrivance thus formed excels the type of fishing line contrivance using a hollow float in the sensation of a bite of fish.

The above and other objects, characteristic features and advantages of the present invention will become apparent to those skilled in the art from the description to be given hereinafter with reference to the accompanying drawings.

FIG. 1 is a front view of a fishing gear for boat fishing according to the first embodiment of embodiment.

FIG. 2 is a rear view of the fishing gear shown in FIG. 1 .

FIG. 3 is a cross section taken through FIG. 1 along line III-III.

FIG. 4 is a cross section taken through FIG. 2 along line IV-IV.

FIG. 5 is a front view of the fishing gear for boat fishing shown in FIG. 1, depicting the state in which the fishing line is released from the fast stop by the fishing line nipping part and enabled to travel freely inside the fishing line passage.

FIG. 6(a) is an overall perspective view of the fishing gear for boat fishing according to the second embodiment of embodiment of this invention, and FIG. 6(b) an enlarged cross section of the fishing line guiding part shown in FIG. 6(a).

FIG. 7(a) is a plan view of the fishing gear for boat fishing according to the third embodiment of this invention, FIG.7(b) a side view of the fishing gear for boat fishing shown in FIG. 7(a), FIG. 7(c) an overall perspective view of the fishing gear for boat fishing shown in FIG. 7(a), depicting the state in which the fishing line is stopped fast on the fishing line nipping part, and FIG. 7(d) an enlarged cross section of the fishing line nipping part shown in FIG. 7(a).

FIG. 8(a) is a front view of the fishing gear for boat fishing according to the fourth embodiment of this invention, FIG. 8(b) a side view of the fishing gear for boat fishing shown in FIG. 8(a), FIG. 8(c) a cross section taken through FIG. 8(a) along line VIII(c)-VIII(c), and FIG. 8(d) an overall perspective view of the fishing gear for boat fishing shown in FIG. 8(a), depicting the state in which the fishing gear is fit to the fishing line and the fishing gear for boat fishing is stopped fast on the fishing line with the fishing line nipping part.

FIG. 9 is an explanatory side view illustrating the state of use of the fishing gear for boat fishing in the first through third embodiments of this invention.

FIG. 10 is an explanatory side view illustrating the state of use of the fishing gear for boat fishing in the third or fourth embodiment of this invention.

FIG. 11 is an explanatory plan view illustrating the ordinary trawling method.

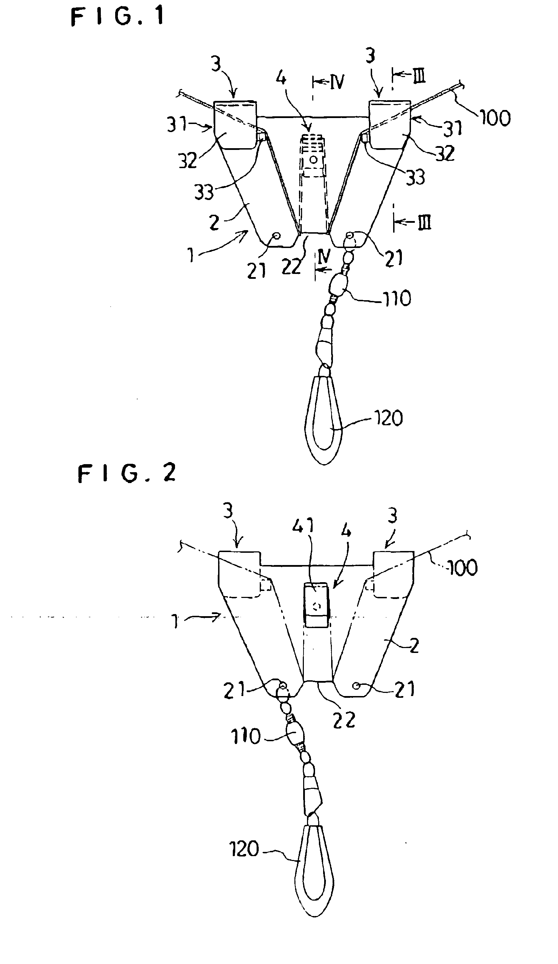

Now, the first embodiment of this invention will be described below with reference to the drawings. A fishing gear 1 for boat fishing contemplated by this invention, as illustrated in FIG. 1 and FIG. 2, is composed of a plate-like mounting member 2 formed in a bilaterally symmetrical shape, fishing line guiding parts 3, and a fishing line nipping palt 4 fixed to the surface of the mounting member 2 on the side opposite the fishing line guiding parts 3. The fishing line guiding parts 3 are severally composed of fishing line attaching and detaching means 32 disposed on the bilaterally opposite sides thereof and guide parts 33 disposed at the lower terminals of the area in which a fishing line 100 travels between the lateral fishing line attaching and detaching means 32.

The mounting member 2 is formed in a plate-like shape with a synthetic resin. This mounting member 2 is provided at the lower bilaterally opposite end parts thereof with connecting holes 21 intended for the insertion of a swivel 110. Through the disentanger B and the connecting holes 21, a weight 120 is enabled to be attached to and detached from the fishing gear 1. Since a lower edge 22 is formed in a downwardly concave shape on the lower side of the mounting member 2, the fishing line 100 taken around on the lower side of the mounting member 2 can be prevented from interfering with the swivel 110 and sustaining damage.

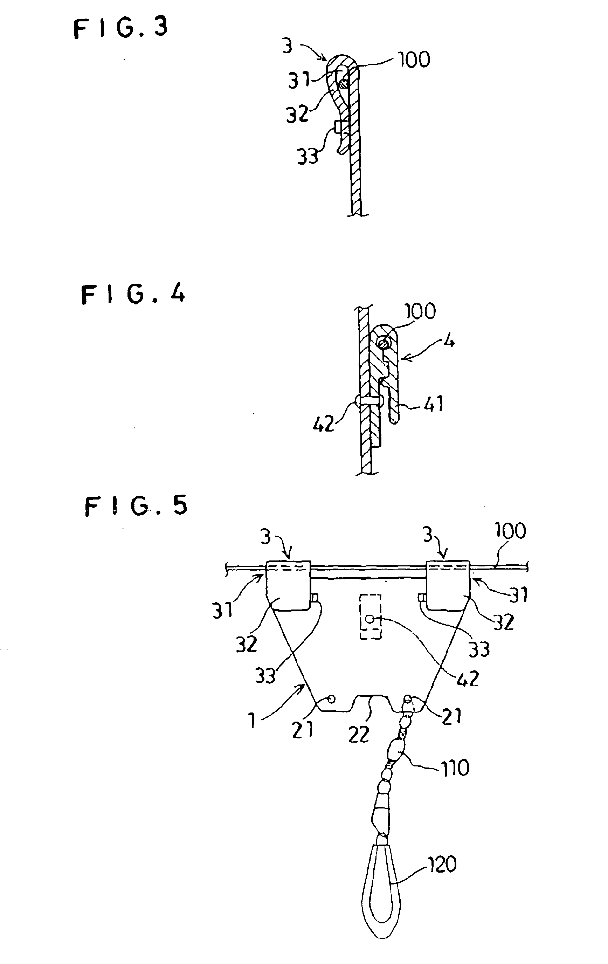

The fishing line guiding part 3, as illustrated in the enlarged cross section of FIG. 3, is formed in a shape such that the cross section thereof is folded back nearly like a hairpin. The part thereof so folded back constitutes the fishing line attaching and detaching means 32. A fishing line passage 31 is formed between the fishing line attaching and detaching means 32 and the mounting member 2 to allow free travel of the fishing line.

Besides the foregoing construction, in manner of disposing clamp means of such a material as a hard synthetic resin like a plastic substance capable of generating elastic force on the bilateral sides of the mounting member 2, thereby giving rise constantly to a space large enough for free travel of the fishing line 100 on the insides of the clamp means or between the clamp means and the mounting member 2, it is possible to construct a fishing guiding part 3 which has the fishing line passage 31 and the fishing line attaching and detaching means 32 disposed integrally therewith. In accordance with this construction, the clamp means, when the fishing line 100 is introduced from outside into the space occurring as described above or when it is taken out of the space, can be elastically deformed into an opening and consequently made to allow free travel of the introduced fishing line 100 inside the space. Thus using the clamp means allows the fishing line passage 31 and the fishing line attaching and detaching means 32 to be integrally formed.

Besides the clamp means, a fastening tool may be used to accomplish the integral formation of the tishing line passage 31 and the fishing line attaching and detaching means 32. For example, the fishing line attaching and detaching means 32 may be composed of a male button piece and a female button piece which is integrally formed with the male button piece through a freely bendable hinge part; the male button piece furnished with an engaging projection and the female button piece furnished with an engaging hole so bored as to allow insertion therein of the engaging projection of the male button piece. When the male button piece and the female button piece jointly constituting the fishing line passage 31 form a space large enough for permitting free travel of the fishing line 100 while they are kept in an engaging state, they form the fishing line guiding part 3.

If a gap exists between the bilateral fishing line passages 31, it will possibly result in rendering difficult the reeling up of the fishing line 100 and as well in suffering excess tensile force to act on a specific part of the fishing line 100 during the course of the reeling up of the fishing line 100 and eventually break the fishing line 100. It is, therefore, preferable to have the bilateral fishing line passages 31 so disposed as to form a nearly straight line as illustrated in FIG. 1 and FIG. 2 and consequently enable the inserted fishing line 100 to form a nearly straight line similarly.

The guide part 33 is disposed at a position corresponding to the lower terminals of the fishing line passages 31 as closely approximated to the bilateral fishing line attaching and detaching means 32 so as to form the lower terminal of the area in which the fishing line 100 is allowed to travel. While the fishing line 100 is remaining in a freely traveling state, therefore, it is infallibly guided to each of the bilateral fishing line passages 31 and prevented from accidentally coming off the fishing line attaching and detaching means 32. Then, while the fishing line 100 exposed between the bilateral fishing guiding parts 3 is taken around from the lower side of the mounting member 2 to the back surface and eventually nipped by the fishing line nipping part 4, the tensile force acting on the fishing line nipping part is lessened because the fishing line 100 collides against the bilateral guide parts 33 and the lower edge 22 of the mounting member 2, and moderate frictional force acts on it.

Then, since the guide part 33 is projected, as illustrated in FIG. 3, more highly than the fishing line passage 31 from the surface of the mounting member 2, it is capable of preventing the fishing line 100 from slipping off the fishing line attaching and detaching means 32.

The fishing line nipping part 4 is fixed with the fixing member 42, such as a rivet, on the back side of the surface of the mounting member 2 seating the fishing line guiding part 3 at an intermediate position between the bilateral fishing line guiding parts 3 in the direction of nipping the fishing line 100 downwardly. The fishing line nipping part 4 is formed with such a material as a hard synthetic resin like a plastic substance which generates elastic force and is made to constitute a clip formed of an elastic plate 41 as illustrated in FIG 4. When tensile force exceeding a stated magnitude acts on the fishing line 100, it is set free from the nip of the fishing line nipping part 4.

The fishing line nipping part 4 can be formed by using a face fastener instead of the clip. In order that the face fastener may be used as properly folded, for example, one part of the face fastener is fixed and the other part thereof is folded back so as to have the fishing line 100 nipped in between the opposed surfaces of the face fastener. In this case, the tensile force acting on the fishing line nipping part 4 can be adjusted by properly varying the portion of folding and the part of joining the opposed surfaces. Owing to the construction of this description, the strength with which the fishing gear 1 for boat fishing is fastened to the fishing line 100 can be properly adjusted in conformity with the conditions of use such as the towing speed.

The fishing gear 1 for boat fishing contemplated by this invention is specifically used as follows. The fishing gear 1 for boat fishing is attached to the fishing line 100 by first selecting a proper portion of the fishing line 100 in consideration of the length of the fishing line to be towed in the sea and introducing the part of the fishing line corresponding to this portion through the fishing line attaching and detaching means 32 into the fishing line passages 31. Then, the part of the fishing line exposed between the fishing line guiding parts 3, in a state stretched by the bilateral guide parts 33, is taken around from the lower edge 22 of the mounting member 2 to the back of the mounting member 2 and eventually nipped by the fishing line nipping part 4. Even the fishing line contrivance which has been already completed as described above can be instantly altered in conformity with the situation because the length of the fishing line from such a fishing tool as a fishhook or a lure to the fishing gear 1 for boat fishing can be easily adjusted to a necessary size.

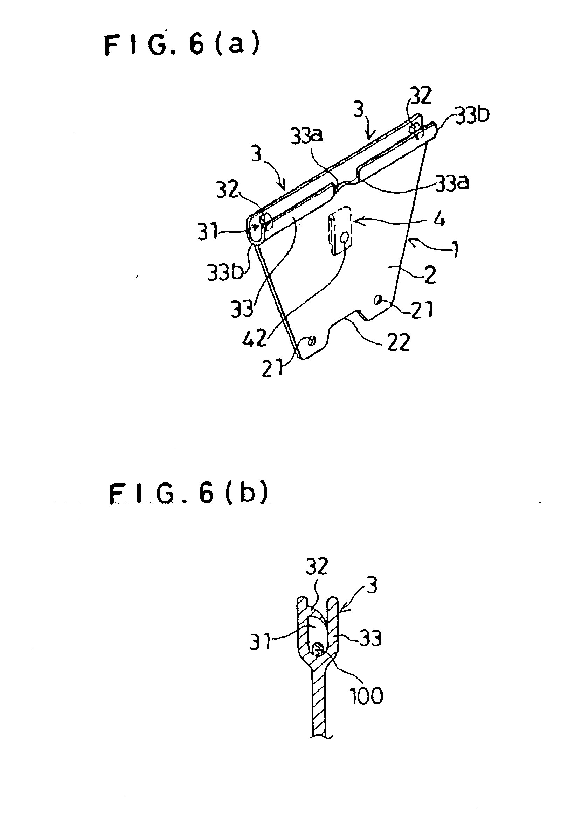

Then, the angler on the fishing boat 300 causes the fishing line contrivance to be tugged from a rod D as illustrated in FIG. 9 and proceeds to enjoy fishing. When tensile force exceeding the prescribed magnitude acts on the fishing line 100 as when the fish hooked by the contrivence gives a strong pull to the fishing line 100 or when the fish is hauled in with the rod D, the fishing line 100 is enabled to travel freely inside the fishing line passage 31 because the fishing line 100 is set free from the nip of the fishing line nipping part 4 and the part of the fishing line 100 exposed between the fishing line guiding parts 3 is made to assume the shape of a straight line as illustrated in FIG. 5. As a result, the fishing line 100 equivalent to the length from the fishing gear I for boat fishing to the fishing tool such as a lure can be taken up with a reel.

Now, the second embodiment of this invention will be described below with reference to the drawings. The fishing gear 1 for boat fishing in the second mode of embodiment illustrated in FIG. 6(a), similarly to the first mode of embodiment, is composed of a bilaterally symmetrical plate-like mounting member 2, fishing line guiding parts 3, and a fishing line nipping part 4 fastened to the surface of the mounting member 2 on the side opposite the fishing line guiding parts 3. The fishing line guiding part 3 is composed of a fishing line attaching and detaching means 32 made of a metal leaf spring or a plate-like elastic member of plastic substance and a guide part 33 made of a member having a nearly U-shaped cross section (refer to FIG. 6(b)). Incidentally, the guide part 33 is formed of a synthetic resin such as a plastic substance or a metal such as an aluminum alloy and the edge terminals 33a and 33b of the guide part 33 are each formed in a smoothly arcuate shape. As a result, no excessive tensile force acts on the fishing line 100.

Then, the mounting member 2, similarly to the first embodiment, is furnished in the lower bilaterally opposite end parts thereof with the connecting holes 21 intended for mounting a disentangler. In the lower side of the mounting member 2, the lower edge 22 intended for enabling the fishing line 100 exposed between the bilateral fishing line guiding parts 3 to be taken around and eventually nipped by the fishing line nipping part 4 is formed in a nearly concaved shape.

The fishing gear 1 for boat fishing in the second embodiment, similarly to the fishing gear 1 for boat fishing in the foregoing first embodiment, is attached to the fishing line 100 by introducing the fishing line 100 through the fishing line attaching and detaching means *32 into the fishing line passages* 31 (refer to FIG. 6(b)). The fishing gear 1 for boat fishing is reduced to a state of attachment to the fishing line 100 by causing the part of the fishing line exposed between the fishing line guiding parts 3 to be stretched and suspended from edge terminals 33a respectively of the bilateral guide parts 33, taken around to the back side of the mounting member 2 and eventually nipped by the fishing line nipping part 4. Subsequently, the fishing line contrivance is tugged as illustrated in FIG. 9 in order that the angler may proceed to enjoy fishing. The fishing line 100 equivalent to the length from the fishing gear 1 for boat fishing to the portion in which the fishing tool such as a lure is connected can be taken up with the reel because the fishing line 100 is set free from the nip of the fishing line nipping part 4 and consequently enabled to allow the fishing line free travel inside the fishing line passage when tensile force exceeding the prescribed magnitude acts on the fishing line.

The fishing gear 1 for boat fishing in the second embodiment enjoys simplicity of construction and excels in production cost because the fishing line attaching and detaching means 32 is formed of a plate-like elastic member and the guide part 33 is formed of a member having a nearly U-shaped cross section.

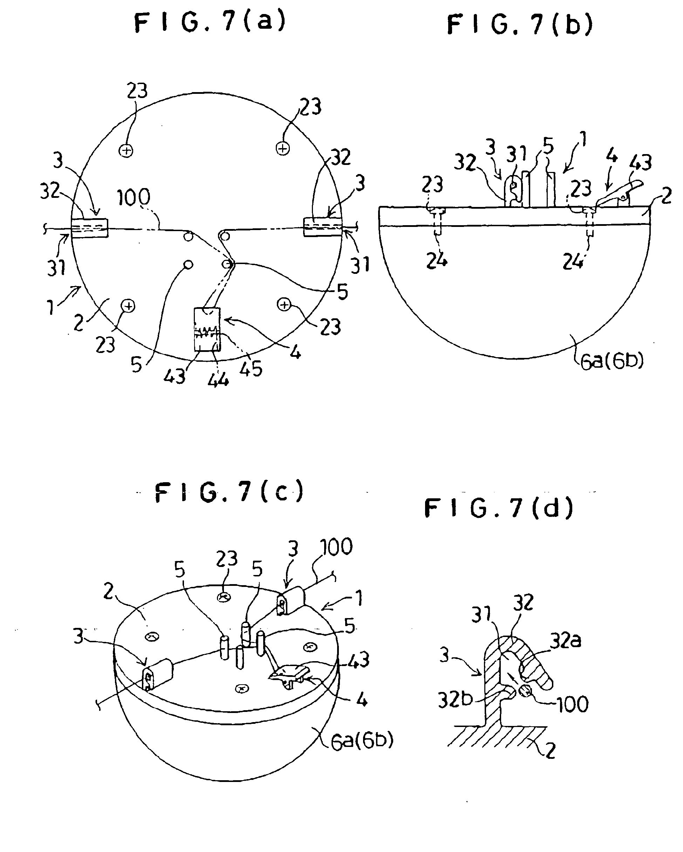

Now, the third embodiment of this invention will be described below with reference to the drawings. The fishing gear 1 for boat fishing in the third embodiment illustrated in FIG. 7 (a) and FIG. 7(b) is composed of a mounting member 2 in a nearly circular shape, fishing line guiding parts 3 projected from the bilaterally opposite terminals of the mounting member 2, a fishing line nipping part 4 fixed on the surface of the mounting member 2 on the same side as the fishing line guiding parts 3, and a plurality of guide parts 5 erected severally in the shape of a column on the mounting member 2 with the object of enabling the fishing line exposed between the fishing line guiding parts 3 to be taken around to the fishing line nipping part 4. The fishing line guiding part 3 is made of a fishing line attaching and detaching means 32 formed in the shape of a clip and the fishing line attaching and detaching means 32 has formed therein the fishing route 31 for enabling the fishing line 100 introduced from outside to be inserted in a freely traveling state.

The mounting member 2 is formed of synthetic resin, metal, etc. in the shape of a bilaterally symmetrical plate-like body and is furnished at four portions with fitting holes 23 serving to fit a weight 6a (or a floating body 6b) removably. The weight 6a (or the floating body 6b) can be freely set up so long as it is capable of being fit to the mounting member 2 and it may be properly altered in conformity with the density of water and the conditions of use. As a concrete example of the method for fitting the weight 6 (or the floating body 6b) to the mounting member 2, a method of fixing it by using such a binding member as a fitting bolt 24 may be cited as shown in FIG. 7(b). Incidentally, the weight 6a (or the floating body 6b) illustrated as a concrete example in FIG. 7(b) and FIG. 7(c) has a hemispherical shape. Optionally, it may be formed in the shape of a semicolumn, prism, pyramid, cone, etc. Preferably, it has a bilaterally symmetric three-dimensional shape. As regards the fitting position thereof, it may be mounted by a one-point support instead of the four-point support implied above so long as it is fixed removably and it is not accidentally dropped off easily during the course of use

The fishing line attaching and detaching means 32 is formed in the shape of a clip with such a material as a hard synthetic resin like a plastic substance which generates elastic force, opened on the lower side so as to allow introduction of a fishing line, and projected from the bilaterally opposite terminals of the mounting member 2. The fishing line attaching and detaching means 32 has the opened part so formed that claw pieces 32a and 32b may be meshed with each other and the fishing line 100 introduced into the fishing line passage 31 may be prevented from slipping off the fishing line attaching and detaching means 32.

The fishing line nipping part 4 is composed of an open-shut plate 43, a spring 44 serving to energize the open-shut plate 43 constantly in the closing direction, and a rotating axis 45 and is disposed rotatably round the rotating axis 45 as the center. The guide parts 5 are formed in a columnar shape and projected integrally with the mounting member 2 nearly in the middle between the fishing guiding parts 3.

Fitting the fishing gear 1 for boat fishing to the fishing line 100 is accomplished by causing the fishing line 100 to push open the claw pieces 32a and 32b of the fishing line attaching and detaching means 32 and then setting the fishing line 100 into the fishing line passage 31. When the fishing line 100 is introduced into the fishing line passages 31 on the bilateral sides in the manner described above, the fishing gear 1 for boat fishing in the third embodiment can be moved to a position of free choice on the fishing line 100.

For the purpose of stopping fast the fishing gear 1 for boat fishing at a freely chosen portion of the fishing line 100, it suffices to fit the fishing gear 1 for boat fishing to the fishing line 100, then bend and bundle in the shape of a hairpin the part of the fishing line 100 exposed between the bilateral fishing guiding parts 3, take around the part of the fishing line 100 in the resultant state so that it is stretched and suspended on at least one of the guide parts 5, and cause the fishing line 100 to be nipped by the fishing line nipping part (FIG. 7(d)).

The fishing gear 1 for boat fishing in the third embodiment is fit as described above as stopped fast at a freely chosen point of the fishing line 100. The fishing gear 1 for boat fishing which is fit with the weight 6a, similarly to the fishing gear 1 for boat fishing in the first or second embodiment, effects fishing by towing and flowing the fishing line contrivance under the surface of the sea. The fishing gear 1 for boat fishing which is fit with the floating body 6b effects fishing by towing and flowing the fishing line contrivance in the state of having the fishing gear 1 for boat fishing floated on the surface of the sea as illustrated in FIG. 10. Thus, the fishing gear 1 for boat fishing in the third embodiment can be used as an underwater weight or a substitute for a sham airplane jig.

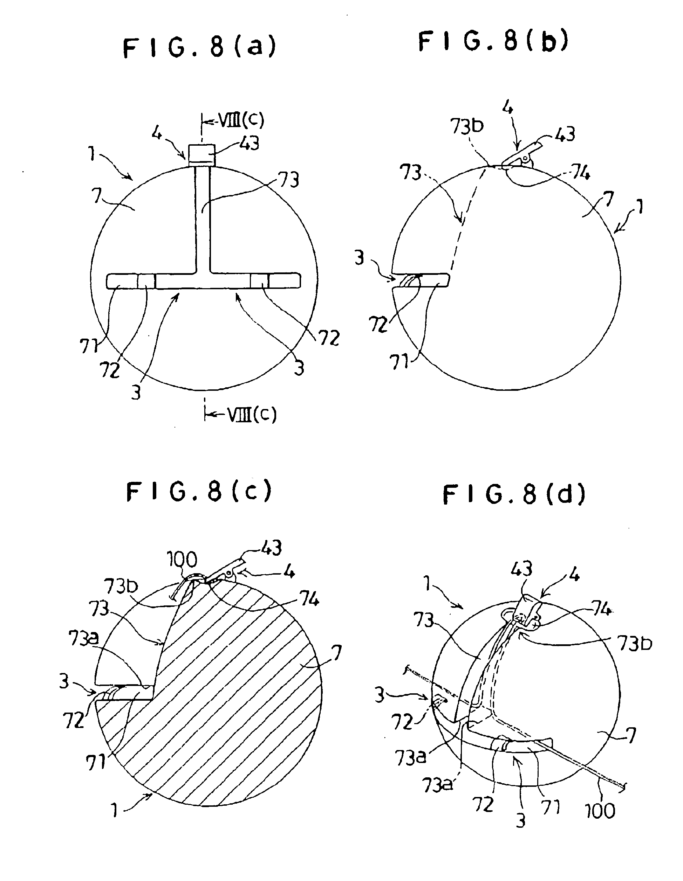

Now, the fourth embodiment will be described below with reference to the drawings. The fishing gear 1 for boat fishing in the fourth embodiment illustrated in FIG. 8(a) is composed of a floating body 7 formed of synthetic resin or wood in a bilaterally symmetric shape and a fishing line nipping part 4 for nipping the fishing line 100 on the floating body 7. The floating body 7 has a fishing line guiding part 3 and a guide passage 73 formed therein each in the shape of a groove. And, the fishing line guiding part 3 is composed of a fishing line passage groove 71 formed with the object of enabling the fishing line 100 to be inserted therein in a freely traveling state and a fishing line attaching and detaching plate 72 serving to introduce the fishing line 100 into the fishing line passage groove 71 and remove the fishing line 100 from the fishing line passage groove 71. The fishing part 3 is severally disposed on the bilaterally opposite sides of the guide passage 73. Incidentally, the fishing line attaching and detaching plate 72 is formed of a metallic leaf spring or a plate-like elastic member of plastic substance and is fixed so that it may form a space fit for allowing travel of the fishing line 100 inside the fishing line passage groove 71.

The guide passage 73 is formed in the shape of a groove extending from the middle of the fishing line guiding parts 3 toward the fishing line nipping part 4 and is adapted to stretch the fishing line 100 between the fishing line guiding parts 3 on the bilaterally opposite sides of the guide passage 73 and suspend it on guide edge parts 73a and guide it to the fishing line nipping part 4. Incidentally, the guide edge parts 73a are formed smoothly lest the fishing line 100 should receive the action of undue tensile force.

As the fishing line nipping part 4, a nipping means which is capable of releasing the fishing line 100 from the nip when the fishing line 100 receives the action of tensile force exceeding the prescribed magnitude can be used. For example, it may be formed as illustrated in FIG. 8(a) through FIG. 8(c) by using the fishing line nipping part 4 which is constructed in the third embodiment. In this case, the floating body 7 is preferred to form the part thereof contacting the leading edge of the fishing line nipping part 4 in such a concave shape as a pressure contacting seat 74 illustrated in FIG. 8(c). Otherwise, as a shape other than the concave shape illustrated in FIG. 8(c), the part may be formed in the shape of a flat surface. When the part is formed like the above-mentioned shapes, the tensile force acting on the fishing line nipping part 4 is lessened because moderate frictional force acts on the fishing line 100 even in the upper edge part 73b of the guide and the tensile force acting on the fishing line part in the pressure contacting seat 74 is consequently lessened.

The fishing gear 1 for boat fishing in the fourth embodiment can be used by the same method as the fishing gear 1 for boat fishing in the first through third embodiments. First, the proper portion of the fishing line 100 is selected in consideration of the length of the fishing line to be towed and flowed in the sea. Then, the fishing line 100 is introduced from the fishing line attaching and detaching plates 72 into the fishing line passage groove 71 and fitted to the fishing gear 1 for boat fishing. Subsequently, the part of the fishing line between the fishing line guiding parts 3 on the bilateral both sides of the guide passage 73 is guided along the guide passage 73 to the fishing line nipping part 4 in order that the part of the fishing line taken out of the guide passage 73 between the bilateral fishing line guiding parts 3 may be stretched and suspended between the guide edge parts 73a and the fishing line nipping part 4. Then, the part of the fishing line is nipped by the fishing line nipping part 4 so that this part may be put between the pressure contacting seat 74 and the open-shut plate 43 of the fishing line nipping part 4 (refer to FIG. 8(d)).

Fishing is effected by fitting the fishing gear 1 for boat fishing of the fourth embodiment to the freely chosen portion of the fishing line 100 as described above and towing and flowing the fishing gear 1 for boat fishing in the state of floating on the surface of the sea as illustrated in FIG. 10. Particularly when the fishing gear 1 for boat fishing of the fifth embodiment is used for the trawling method, it can be made to slide on the surface of water by buoyancy and used in the place of the sham airplane jig. Then, in the case of doing float fishing in the sea area having a comparatively large water depth, the fishing line contrivance to be used normally has a greater length than the fishing rod. When the fishing gear 1 for boat fishing in the fourth embodiment is used in the above-mentioned case, the fishing line contrivance which is capable of easily reeling up the fishing line can be formed. Further, the fishing line contrivance excels a contrivance using a hollow float in the sensation of catch of fish.

## Claims

1. A fishing gear for boat fishing comprising fishing line guiding parts severally composed of a fishing line passage serving to allow a fishing line free travel and insertion and fishing line attaching and detaching means serving to permit said fishing line to be introduced into said fishing line passage and to be removed from said fishing line passage that are disposed bilaterally across an interval and
said fishing gear being furnished with a fishing line nipping part capable of nipping a part of the fishing line exposed between said fishing line guiding parts and releasing nip of the fishing line when tensile force exceeding a prescribed magnitude acts on the fishing line.

2. A fishing gear for boat fishing according to claim 1, further comprising a mounting member on which the fishing line guiding parts and the fishing line nipping part are disposed and which is furnished removably with at least either of a weight and a floating body..

3. A fishing gear for boat fishing according to claim 2, wherein said fishing line nipping part is disposed on a side of the mounting member opposite a side on which said fishing line guiding part is disposed.

4. A fishing gear for boat fishing according to claim 2, further comprising a guide part so projected on said mounting member that the fishing line exposed between the fishing line guiding parts is stretched and suspended and said fishing line is guided to the fishing line nipping part while said fishing line nipping part is keeping the fishing line in a nipped state.

5. A fishing gear for boat fishing according to claim 1, further comprising a floating body on which the fishing line guiding parts and fishing line nipping part are disposed.

6. A fishing gear for boat fishing according to claim 5, further comprising a guide passage formed toward said fishing line nipping part between said fishing line guiding parts so that the fishing line between said bilateral fishing line guiding parts is stretched and suspended and said fishing line is guided to said fishing line nipping part while said fishing line nipping part is keeping the fishing line in a nipped state.
